# FASCICULE DE BREVET EUROPEEN

(11) **EP 2 371 711 B1**
(45) Date de publication et mention de la délivrance du brevet: **09.05.2012**
(21) Numéro de dépôt: 11001288.7
(22) Date de dépôt: 17.02.2011
(51) Int. Cl.: B64C 27/46, B64C 27/72

(54) **Pale de voilure tournante, voilure tournante munie d'une telle pale, et aéronef**
Rotorblatt und Hubschrauber mit einem solchem Blatt
Rotor blade and helicopter carrying said blade

(30) Priorité: 23.03.2010 FR 1001141
(43) Date de publication de la demande: 05.10.2011
(73) Titulaire: EUROCOPTER, 13725 Marignane cedex (FR)
(72) Inventeur: Hirsch, Jean-François, 13090 Aix en Provence (FR); Gaffiero, Jacques, 75017 Paris (FR)
(74) Mandataire: Pouillot, Laurent Pierre Paul

(56) Documents cités:
- WO-A2-2008/002809
- GB-A- 2 280 412
- GB-A- 2 298 624
- JP-A- 9 254 894
- US-A- 2 455 866
- US-A- 5 505 589
- US-A1- 2005 158 175

## Description

La présente invention concerne une pale de voilure tournante munie d'un tronçon à flèche arrière, une voilure tournante munie d'une telle pale et un aéronef muni d'une telle voilure tournante.

Une voilure tournante d'un giravion doit naturellement présenter des performances aérodynamiques propres à assurer la sustentation du giravion, voire sa propulsion dans le cas d'un hélicoptère par exemple. De plus, la voilure tournante doit satisfaire aux exigences contraignantes des normes de certification acoustique. Il s'ensuit que la géométrie d'une pale est éventuellement définie en prenant en compte ces deux aspects qui peuvent parfois se révéler antagonistes.

Le document EP 1557354 présente une pale de voilure tournante optimisée d'un point de vue acoustique.

Cette pale présente un tronçon à flèche arrière.

On rappelle qu'en partant de son extrémité la plus proche du pied de la pale et en allant vers l'extrémité libre de la pale, un tronçon à flèche arrière est dirigé selon un sens opposé au sens d'avancement de la pale de manière à former un angle négatif avec une direction radiale de la pale. A l'inverse un tronçon à flèche avant est dirigé selon le sens d'avancement de la pale de manière à former un angle positif avec une direction radiale de la pale. On note que l'homme du métier maitrise parfaitement le vocabulaire relatif aux flèches avant et arrière.

Plus précisément, selon le document EP 1557354, la pale comporte successivement en partant de son pied un tronçon radial à flèche nulle, un tronçon à flèche avant puis un tronçon à flèche arrière.

Une telle pale présente des caractéristiques acoustiques optimisées.

Toutefois, on note qu'une pale présentant notamment un tronçon à flèche arrière est rigide en torsion, une pale rigide en torsion possédant un premier mode de déformation en torsion élevé.

On note qu'une pale est dite rigide en torsion lorsque que son premier mode de torsion est situé au-delà d'une fréquence donnée. Par exemple, une pale est dite rigide en torsion quand ladite fréquence donnée est supérieure à quatre fois le régime nominal du rotor pour un rotor articulé.

Cette rigidité garantit un bon comportement dynamique de la pale et son pilotage en pas. Toutefois, cette rigidité est contraignante si l'on souhaite vriller activement la pale.

Or, on rappelle qu'une pale s'étend longitudinalement d'une première extrémité destinée à être fixée à un moyeu tournant d'un rotor vers une deuxième extrémité dite extrémité libre. Par rapport au rotor, on comprend que la pale s'étend radialement de la première extrémité vers la deuxième extrémité. De plus, cette pale s'étend transversalement d'un bord d'attaque vers un bord de fuite. La pale comprend notamment un revêtement extérieur muni d'une première peau au niveau de son extrados dénommée par commodité « peau d'extrados », et d'une deuxième peau au niveau de son intrados dénommée par commodité « peau d'intrados ».

Une pale d'un rotor principal de sustentation d'un giravion exerce une portance durant le mouvement rotatif dudit rotor principal permettant de sustenter le giravion voire de le propulser. En fonction de l'angle de pas de la pale, la portance développée est plus ou moins importante. L'angle d'incidence aérodynamique de chaque profil aérodynamique de la pale, dénommé « profil » par commodité, d'une section normale à l'axe de variation de pas de la pale dépend de l'angle de pas de la pale.

Par contre, on observe à partir d'un angle d'incidence seuil d'un profil donné, donc d'une section de la pale, un décollement des filets d'air au niveau du bord d'attaque ou en arrière en direction du bord de fuite de ce profil. Ce décollement provoque un décrochage de la pale, soit une chute brutale de sa portance si ce phénomène se propage et demeure sur une zone comprise ente deux profils délimitant une surface critique selon l'envergure de la pale. De plus, le décollement des filets d'air génère un tourbillon qui est à l'origine d'une augmentation du coefficient de traînée de la pale et de vibrations.

Pour limiter les décollements, une solution consiste à vriller géométriquement la pale. Il est à noter que le vrillage géométrique d'une pale peut se définir par l'angle formé entre la corde de chaque profil d'une section de la pale avec un plan de référence de cette pale. Parfois, on vrille chaque profil de la pale par rapport à l'axe de variation de pas de cette pale d'un angle repéré par rapport à un tel plan de référence.

Pour une trajectoire de pale donnée, on comprend que le vrillage influe directement sur l'incidence aérodynamique de chaque profil. Dans ces conditions, on appelle « loi de vrillage » l'évolution selon l'envergure de la pale desdits angles de vrillage.

La loi de vrillage d'une pale est immuable par construction. Cette loi de vrillage résulte d'un compromis admis pour satisfaire le fonctionnement optimal du rotor sur l'ensemble du domaine de vol.

En effet, on constate qu'une amplitude de vrillage faible sur l'ensemble de l'envergure de la pale, à savoir l'écart entre les angles extrêmes de vrillage, permet de minimiser la puissance consommée par le rotor de sustentation d'un giravion en vol d'avancement. A l'inverse, une amplitude de vrillage importante sur l'ensemble de l'envergure de la pale permet de minimiser la puissance consommée par le rotor de sustentation d'un giravion en vol stationnaire mais est rédhibitoire dans le cas d'un vol d'avancement. On note que l'on entend par « amplitude faible » une amplitude inférieure à 6 degrés par exemple, alors que l'on entend par « amplitude importante » une amplitude supérieure à 20 degrés, par exemple.

Ainsi, une amplitude de vrillage comprise entre ces amplitudes faible et importante représente un compromis entre une phase de vol d'avancement et une phase de vol stationnaire en termes de puissance consommée.

Pour éviter un tel compromis, il est envisagé de piloter le vrillage d'une pale à l'aide de moyens dédiés, au moins localement.

Selon une solution, on utilise au moins un volet prolongeant localement le bord de fuite de la pale. En modifiant le braquage de ce volet par rapport à la pale, on modifie finalement la géométrie locale de la pale et les caractéristiques aérodynamiques des profils correspondant.

Cette solution présente l'avantage d'engendrer une déformation et un vrillage locaux Les publications suivantes sont relatives à l'actionnement de tels volets :
- O. Dieterich, B. Enenkl, D. Roth : Trailing edge flaps for active rotor control, Aeroelastic characteristics of the ADASYS rotor system, American Helicopter Society, 62 th Annual Forum, Phoenix, AZ, May 9-11, 2006.
- S. R. Hall and E. F. Prechtl : Preliminary Testing of a Mach-Scaled Active Rotor Blade with a Trailing Edge Servo-Flap, Massachusetts Institute of Technology 77 Massachusetts Ave Cambridge, MA 02139-4307 USA, 2000.
- V. Giurgiutiu : Active-Materials Induced-Strain Actuation for Aeroelastic Vibration Control, The Shock and Vibration Digest, Vol. 32, No. 5, September 2000, 355-368.
- F. K. Straub, D. K. Kennedy, D. B. Domzalski, A. A. Hassan, H. Ngo, V. Anand, et T. Birchette : Smart material-actuated Rotor Technology, Journal of intelligent Material Systems and Structures, Vol. 15 April 2004.
- C. K. Maucher, B. A. Grohmann, P. Jänker, A. Altmikus, F. Jensen, H. Baier : Actuator design for the active trailing edge of a helicopter rotor blade.
- K. Thanasis : Smart Rotor Blades and Rotor Control for Wind Turbines, State of the Art, UpWind internal report for WP 1B3, Décembre 2006.

De même, les documents US7424988, US20080237395, US6513762, US5387083, US6135713, US5626312 évoquent la présence de volets.

Toutefois, les volets paraissent être disposés sur des pales basiques, et non pas des pales rigides en torsion munies d'un tronçon à flèche arrière. En effet, les volets sont agencés sur des paies souples en torsion pour "tordre" dynamiquement la pale et chercher à réduire le bruit et les vibrations du rotor. En effet, il parait par définition à priori difficile de vriller une pale rigide en torsion, du moins sans pénaliser les performances aérodynamiques de la pale.

D'ailleurs, on note que le document GB 2298624 présente une pale utilisant un volet pour modifier le pas de cette pale et non pas pour vriller cette pale.

L'état de la technique inclut de plus les documents GB 2 280 412, US 2005/158175, US 5 505 589, WO 2008/ 002809, US 2 455 866 et JP 09254894.

La présente invention a ainsi pour objet une pale rigide en torsion peu bruyante présentant un comportement dynamique sain, des performances aérodynamiques améliorées, et un moyen de modification du vrillage dénommé « moyen de vrillage » par commodité pour satisfaire aux objectifs prévus dans les différents configurations de vol d'un giravion.

Selon l'invention, une pale de voilure tournante effectuant une rotation à une fréquence nominale, ladite pale est rigide en torsion et s'étend d'un pied vers une extrémité libre, la pale comportant au moins un tronçon à flèche arrière, le pied de la pale étant relié à une bielle de pas de cette pale.

On rappelle qu'une voilure tournante effectue une rotation à une vitesse nominale donnée exprimée classiquement en tours par minute, la fréquence nominale étant exprimée en Hertz et étant égale au nombre de tours effectués par la voilure tournante en une seconde à la vitesse nominale.

Dès lors cette pale a un premier mode de déformation en torsion se produisant à une fréquence en torsion supérieure à quatre fois ladite fréquence nominale de la voilure tournante devant accueillir ladite pale.

On se référera à la littérature pour obtenir des compléments d'informations relatifs aux pales rigides en torsion.

De plus, la pale est notamment remarquable en ce qu'elle comporte un moyen de vrillage mobile fixé au tronçon à flèche arrière, la pale ayant un moyen de pilotage du vrillage de cette pale pour piloter la position angulaire du moyen de vrillage par rapport au tronçon à flèche arrière.

Dès lors, le moyen de pilotage permet de déplacer le moyen de vrillage mobile par rapport au corps du tronçon à flèche arrière. En modifiant ainsi l'incidence du moyen de vrillage par rapport au corps de ce tronçon à flèche arrière et au reste de la pale, on génère un effort localement au niveau du moyen de vrillage.

Or, la partie avant de la pale étant représentée par le bord d'attaque de cette pale, le tronçon à flèche arrière de la pale étant dirigé vers l'arrière, le moyen de vrillage est déporté vers l'arrière de la pale. En générant un effort relativement peu important à l'aide du moyen de vrillage au niveau du bord de fuite du tronçon à flèche arrière, on obtient finalement un moment de torsion suffisant pour modifier le vrillage de la pale de quelques degrés, entre le point d'application de l'effort à savoir le moyen de vrillage et le pied de pale en raison d'un bras de levier optimisé. Il devient alors possible de vriller activement une pale pourtant rigide en torsion.

On note que la déformation de la pale est totalement réversible et réglable. En effet, il suffit de modifier l'incidence du moyen de vrillage mobile par rapport au tronçon à flèche arrière pour obtenir la déformation souhaitée.

Le moyen de vrillage ne modifie pas le pas de la pale mais permet de vriller une pale paraissant impossible à vriller du fait de sa rigidité en torsion.

La pale peut comporter des caractéristiques additionnelles.

Ainsi, le moyen de vrillage générant une portance, chaque profil de la pale ayant un centre de torsion, la portance est déportée en corde par rapport à un alignement des centres de torsion, à savoir selon une direction présentant une angulation avec l'axe de variation de pas de la pale.

Dès lors, le déport en corde du moyen de vrillage génère un bras de levier de la portance par rapport audit alignement des centres de torsion. Il en résulte une création d'un moment de torsion apte à vriller la pale au moins partiellement.

Selon un autre aspect, le moyen de vrillage mobile comprend éventuellement au moins un volet articulé. Ce volet du moyen de vrillage a alors pour fonction de vriller la pale et non pas de modifier le pas de cette pale.

Ce volet peut alors être articulé au bord de fuite du tronçon à flèche arrière.

De plus, à partir du pied de la pale, la pale comprend successivement un tronçon radial à flèche nulle, un tronçon à flèche avant, puis ledit tronçon à flèche arrière.

La pale peut aussi comporter au moins une des caractéristiques de la pale décrites par le document EP 1557354.

En outre, la pale s'étendant d'un premier tronçon extrémal à partir du pied vers un deuxième tronçon extrémal à l'extrémité libre, le tronçon à flèche arrière constitue le deuxième tronçon extrémal.

En maximisant la distance séparant le pied de la pale du moyen de vrillage, on peut obtenir un vrillage sur toute l'envergure de la pale.

On note que le résultat du vrillage est dépendant de la raideur de la pale en torsion. Son amplitude peut varier localement en fonction de ladite raideur.

Par ailleurs, le moyen de pilotage peut posséder une mémoire contenant des lois de vrillage en fonction de divers paramètres, par exemple en fonction de la vitesse d'avancement de l'aéronef.

Selon une autre variante, la pale comprend un moyen de commande relié au moyen de pilotage, le moyen de commande étant déporté en dehors de la pale pour être activable par un opérateur. Par exemple, le moyen de commande est agencé dans le cockpit de l'aéronef muni de la pale, un pilote de cet aéronef pouvant modifier le vrillage de la pale à l'aide du moyen de commande.

Conformément à un autre aspect de l'invention, le moyen de pilotage est un moyen pour piloter le moyen de vrillage sur une faible amplitude sensiblement inférieure à 15 degrés. Ainsi, on réalise une déformation "statique », et non pas une déformation en fréquence du type utilisée pour piloter le pas de la pale.

Outre une pale, l'invention a pour objet une voilure tournante effectuant une rotation à une fréquence nominale qui est munie d'une pale selon l'invention telle que décrite précédemment.

De plus, la pale a un premier mode de déformation en torsion se produisant à une fréquence en torsion supérieure à quatre fois ladite fréquence nominale de la voilure tournante.

Enfin, l'invention vise un aéronef à voilure tournante munie d'une voilure tournante selon l'invention effectuant une rotation à une fréquence nominale.

L'invention et ses avantages apparaîtront avec plus de détails dans le cadre de la description qui suit avec des exemples de réalisation donnés à titre illustratif en référence aux figures annexées qui représentent :
- la figure 1, une vue d'une pale selon un premier mode de réalisation,
- la figure 2, une vue d'une pale selon un deuxième mode de réalisation, et
- la figure 3, un aéronef muni d'une pale selon le premier mode de réalisation.

Les éléments présents dans plusieurs figures distinctes sont affectés d'une seule et même référence.

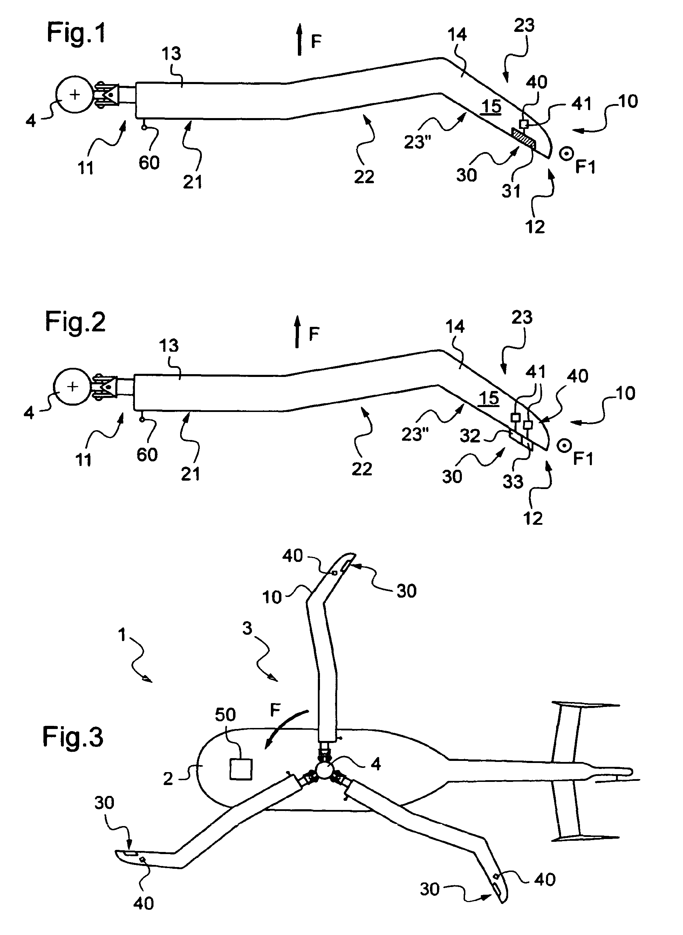

La figure 1 présente une pale 10 selon un premier mode de réalisation.

Quel que soit le mode de réalisation, cette pale 10 s'étend d'un pied 11 fixé à un moyeu 4 d'une voilure tournante vers une extrémité libre 12.

De plus, la pale 10 est munie d'un tronçon en flèche arrière 23. En accord avec l'exemple représenté sur les figures, la pale 10 peut comporter successivement en partant du pied 11 un tronçon radial à flèche nulle 21, un tronçon à flèche avant 22 puis le tronçon à flèche arrière 23.

On rappelle qu'un tronçon à flèche avant présente une angulation positive selon le sens d'avancement F de la pale 10 par rapport à un tronçon radial à flèche nulle alors qu'un tronçon à flèche arrière présente une angulation négative selon le sens d'avancement F, ces notions de flèche avant et flèche arrière étant explicitées dans la littérature.

En outre, le pied 11 de la pale comporte une bielle de pas 60, cette bielle de pas 60 étant reliée par une articulation au pied de la pale pour commander la modification du pas de la pale 10.

Par ailleurs, la pale 10 est pourvue d'un système de vrillage pilotable apte à modifier le vrillage de la pale, notamment durant la rotation de la pale autour de l'axe de rotation du moyeu 4. Ce système de vrillage pilotable n'a donc pas pour fonction de modifier le pas de la pale 10, le contrôle du pas étant dévolu à la bielle de pas 60.

Ce système de vrillage comprend un moyen de vrillage 30 mobile fixé au tronçon à flèche arrière 23. Par exemple, le moyen de vrillage 30 est muni d'au moins un volet articulé au bord de fuite 23" du tronçon à flèche arrière 23.

Selon le premier mode de réalisation de la figure 1, le volet 31 du moyen de vrillage 30 est profilé et s'intègre dans le profil aérodynamique du tronçon à flèche arrière 23.

Selon le deuxième mode de réalisation de la figure 2, le volet 32, 33 saille localement du tronçon à flèche arrière 23 en le prolongeant.

Indépendamment du mode de réalisation, on note que le moyen de vrillage 30 peut comprendre un volet 31 à l'instar de l'exemple de la figure 1 ou plusieurs volets 32, 33 comme le montre la figure 2.

De plus, la pale comprend un moyen de pilotage 40 du moyen de vrillage 30. Par exemple le moyen de pilotage est un moteur rotatif apte à engendrer une rotation du moyen de vrillage autour de son axe de fixation au tronçon à flèche arrière 23. Le moyen de pilotage 40 peut être agencé à l'intérieur de la pale, et notamment à l'intérieur du tronçon à flèche arrière 23.

Eventuellement, en référence à la figure 2, le moyen de pilotage peut posséder une pluralité d'unités, un moteur 41 par volet par exemple. On comprend que tout autre moyen de déplacement peut être utilisé.

Ainsi, le moyen de pilotage peut requérir une rotation du moyen de vrillage par rapport au tronçon à flèche arrière 23. Cette rotation génère des efforts verticaux selon la direction F1. Or, Le déport vers l'arrière de la pale du moyen de vrillage induit la création d'un moment de torsion par lesdits efforts verticaux par rapport à l'axe de torsion. La pale 10 tend alors à se vriller progressivement entre son pied 11 et le moyen de vrillage.

Le déport vers l'arrière en corde du moyen de vrillage génère une démultiplication de l'effort, via un effet de bras de levier par rapport à l'alignement des centres de torsion des parties à l'intérieur du diamètre rotor qui suit une géométrie plutôt droite.

Par ailleurs, en éloignant au maximum le moyen de vrillage 30 du pied 11, on peut vriller une portion maximale de la pale 10.

De plus, on comprend que le moment de torsion est aussi maximisé. Une faible rotation du moyen de vrillage 30 génère donc un vrillage important de la pale 10.

Par suite, en partant du pied 11 vers l'extrémité libre 12, la pale s'étend d'un premier tronçon extrémal 13 vers un deuxième tronçon extrémal 14. Le tronçon à flèche arrière 23 constitue éventuellement le deuxième tronçon extrémal 14.

Optionnellement, pour limiter l'émission de bruit, le moyen de pilotage a pour fonction de piloter le moyen de vrillage 30 sur une faible amplitude sensiblement inférieur à 15 degrés.

De plus, on pilote la déformée de la pale en fonction de la configuration du vol de manière à obtenir une déformation statique pendant la durée d'une phase de vol donnée.

La figure 3 présente un aéronef 1 pourvu d'une voilure tournante 3, l'aéronef schématisé étant un hélicoptère.

Cette voilure tournante comprend un moyeu 4 sur lequel sont fixées une pluralité de pales trois pales 10 par exemple.

Les moyens de pilotage 40 de chaque pale 10 peuvent comprendre des lois de pilotage des moyens de vrillage 30, pour modifier le vrillage de la pale en fonction de la phase de vol par exemple.

Selon la variante alternative schématisée, chaque pale 10 comprend un moyen de commande 50 déporté et agencé dans le cockpit 2 de l'aéronef 1, éventuellement. A l'instar de la variante schématisée, au moins deux pales distinctes peuvent avoir un moyen de commande commun.

Le moyen de commande est relié à chaque moyen de pilotage par une connexion filaire ou sans fil.

A l'aide de ce moyen de commande 50, le pilote de l'aéronef modifie alors manuellement le vrillage de chaque pale 10.

Le moyen de commande peut aussi servir à mettre en route un mode automatique de vrillage.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, le tronçon en flèche avant et le tronçon radial à flèche nul sont facultatifs, ou pourrait être positionnés de manière différente par rapport au tronçon à flèche arrière.

## Revendications

1. Pale (10) d'une voilure tournante (3) effectuant une rotation à une fréquence nominale, ladite pale étant rigide en torsion et s'étendant d'un pied (11) vers une extrémité libre (12), ladite pale (10) comportant au moins un tronçon à flèche arrière (23), ledit pied de la pale (11) étant relié à une bielle de pas (60),
**caractérisée en ce que** ladite pale (10) comporte un moyen de vrillage (30) mobile fixé au tronçon à flèche arrière (23), ladite pale (10) ayant un moyen de pilotage (40) du vrillage de la pale (10) pour piloter la position angulaire dudit moyen de vrillage (30) par rapport audit tronçon à flèche arrière (23).

2. Pale selon la revendication 1,
**caractérisée en ce que** ledit moyen de vrillage (30) générant une portance, chaque profil de ladite pale ayant un centre de torsion, ladite portance est déportée en corde par rapport à un alignement desdits centres de torsion.

3. Pale selon l'une quelconque des revendications précédentes,
**caractérisée en ce que** ledit moyen de vrillage (30) mobile comprend au moins un volet (31, 32, 33) articulé.

4. Pale selon la revendication 3,
**caractérisée en ce** ledit volet (31,32, 33) est articulé au bord de fuite (23") dudit tronçon à flèche arrière (23).

5. Pale selon l'une quelconque des revendications précédentes,
**caractérisée en ce qu'**à partir du pied (11) de la pale (10), la pale (10) comprend successivement un tronçon radial à flèche nulle (21), un tronçon à flèche avant (22), puis ledit tronçon à flèche arrière (23).

6. Pale selon l'une quelconque des revendications précédentes,
**caractérisée en ce que**, la pale s'étendant d'un premier tronçon extrémal (13) à partir dudit pied (11) vers un deuxième tronçon extrémal (14) à ladite extrémité libre (12), ledit tronçon à flèche arrière (23) constitue ledit deuxième tronçon extrémal (14).

7. Pale selon l'une quelconque des revendications précédentes,
**caractérisée en ce que** la pale (10) comprend un moyen de commande (50) relié au moyen de pilotage (40), ledit moyen de commande (50) étant déporté en dehors de la pale (10) pour être activable par un opérateur.

8. Pale selon l'une quelconque des revendications précédentes,
**caractérisée en ce que** ledit moyen de pilotage (40) pilote ledit moyen de vrillage (30) sur une faible amplitude inférieure à 15 degrés.

9. Voilure tournante (3) effectuant une rotation à une fréquence nominale,
**caractérisée en ce qu'**elle comporte au moins une pale (10) selon l'une quelconque des revendications précédentes.

10. Voilure tournante (3) selon revendication 9, **caractérisée en ce que** ladite pale a un premier mode de déformation en torsion se produisant à une fréquence en torsion supérieure à quatre fois ladite fréquence nominale de la voilure tournante.

11. Aéronef (1),
**caractérisée en ce qu'**il comporte une voilure tournante selon la revendication 9.

## Claims

1. Blade (10) of a rotary wing (3) performing rotation at a nominal frequency, said blade being rigid in torsion and extending from a root (11) towards a free end (12), said blade (10) including at least one swept-back segment (23), said blade root (11) being connected to a pitch rod (60),
**characterised in that** said blade (10) includes a movable twist means (30) fastened to the swept-back segment (23), said blade (10) having an actuating means (40) for the twisting of the blade (10) to control the angular position of said twist means (30) relative to said swept-back segment (23).

2. Blade according to Claim 1,
**characterised in that** said twist means (30) generates lift, each profile of said blade having a torsion centre, said lift being offset along a chord relative to an alignment of said torsion centres.

3. Blade according to either one of the preceding claims,
**characterised in that** said movable twist means (30) comprises at least one hinged flap (31, 32, 33).

4. Blade according to Claim 3,
**characterised in that** said flap (31, 32, 33) is hinged to the trailing edge (23") of said swept-back segment (23).

5. Blade according to any one of the preceding claims, **characterised in that** starting from the root (11) of the blade (10), the blade (10) comprises in succession a straight radial segment (21), a swept-forward segment (22), and then said swept-back segment (23).

6. Blade according to any one of the preceding claims,
**characterised in that** the blade extends from a first end segment (13) starting from said root (11) towards a second end segment (14) at said free end (12), said swept-back segment (23) constituting said second end segment (14).

7. Blade according to any one of the preceding claims,
**characterised in that** the blade (10) includes a control means (50) connected to the actuating means (40), said control means (50) being remote from the blade (10) so as to be activatable by an operator.

8. Blade according to any one of the preceding claims,
**characterised in that** said actuating means (40) actuates said twist means (30) over a small amplitude of less than 15 degrees.

9. Rotary wing (3) performing rotation at a nominal frequency,
**characterised in that** it includes at least one blade (10) according to any one of the preceding claims.

10. Rotary wing (3) according to Claim 9,
**characterised in that** said blade has a first torsion deformation mode that occurs at a torsion frequency greater than four times said nominal frequency of the rotary wing.

11. Aircraft (1),
**characterised in that** it includes a rotary wing according to Claim 9.

## Patentansprüche

1. Rotorblatt (10) eines Drehflügels (3), welches sich mit einer Nennfrequenz dreht, wobei das Rotorblatt torsionssteif ist und sich von einem Fuß (11) aus zu einem freien Ende (12) erstreckt, wobei das Rotorblatt (10) mindestens einen positiv gepfeilten Abschnitt (23) aufweist, und der Fuß des Rotorblatts (11) mit einer Steuerstange (60) für den Anstellwinkel verbunden ist,
**dadurch gekennzeichnet, dass** das Rotorblatt (10) ein bewegliches Verdrehmittel (30) aufweist, welches an dem Abschnitt mit positiver Pfeilung (23) befestigt ist, und das Rotorblatt (10) ein Einstellmittel (40) für die Verdrehung des Rotorblatts (10) aufweist, um die Winkelstellung des Verdrehmittels (30) relativ zum Abschnitt mit positiver Pfeilung (23) einzustellen.

2. Rotorblatt nach Anspruch 1,
**dadurch gekennzeichnet, dass** das Verdrehmittel (30) einen Auftrieb erzeugt, und jeder Querschnitt des Rotorblatts einen Torsionsmittelpunkt aufweist, wobei der Auftrieb bezüglich einer Ausrichtung der Torsionsmittelpunkte winkelmäßig versetzt ist.

3. Rotorblatt nach einem der vorstehenden Ansprüche,
**dadurch gekennzeichnet, dass** das bewegliche Verdrehmittel (30) mindestens eine angelenkte Klappe (31, 32, 33) aufweist.

4. Rotorblatt nach Anspruch 3,
**dadurch gekennzeichnet, dass** die Klappe (31, 32, 33) an der Hinterkante (23") des Abschnitts mit positiver Pfeilung (23) angelenkt ist.

5. Rotorblatt nach einem der vorstehenden Ansprüche,
**dadurch gekennzeichnet, dass** ausgehend von dem Fuß (11) des Rotorblatts (10) das Rotorblatt (10) in aufeinanderfolgend aufweist: einen Radialabschnitt ohne Pfeilung (21) einen Abschnitt mit negativer Pfeilung (22) und schließlich den Abschnitt mit positiver Pfeilung (23).

6. Rotorblatt nach einem der vorstehenden Ansprüche,
**dadurch gekennzeichnet, dass** das Rotorblatt sich von einem ersten Endabschnitt (13) ausgehend von dem Fuß (11) zu einem zweiten Endabschnitt (14) bis zu dem freien Ende (12) erstreckt, wobei der Abschnitt mit positiver Pfeilung (23) den zweiten Endabschnitt (14) bildet.

7. Rotorblatt nach einem der vorstehenden Ansprüche,
**dadurch gekennzeichnet, dass** das Rotorblatt (10) ein Steuermittel (50) aufweist, welches mit dem Einstellmittel (40) verbunden ist, wobei das Steuermittel (50) außerhalb des Rotorblatts (10) angeordnet ist, um von einer Bedienungsperson betätig werden zu können.

8. Rotorblatt nach einem der vorstehenden Ansprüche,
**dadurch gekennzeichnet, dass** das Einstellmittel (40) das Verdrehmittel (30) mit einer geringen Winkelverstellung von weniger als 15° verstellt.

9. Drehflügel (3), der sich mit einer Nennfrequenz dreht,
**dadurch gekennzeichnet, dass** er mindestens ein Rotorblatt (10) nach einem der vorstehenden Ansprüche aufweist.

10. Drehflügel (3) nach Anspruch 9,
**dadurch gekennzeichnet, dass** das Rotorblatt einen ersten Torsionsverformungsmodus aufweist, der sich bei einer Torsionsfrequenz einstellt, die viermal so groß ist wie die Nennfrequenz des Drehflügels.

11. Luftfahrzeug (1),
**dadurch gekennzeichnet, dass** es einen Drehflügel nach Anspruch 9 aufweist.
